# EUROPEAN PATENT APPLICATION

(11) **EP 1 602 631 A1**
(43) Date of publication of application: **07.12.2005**
(21) Application number: 04705516.5
(22) Date of filing: 27.01.2004
(51) Int. Cl.: C03C 3/087, C03B 27/04

(54) **GLASS SHEET SUITABLE TO TOUGHENING AND TOUGHENED GLASS USING SAID GLASS**

(30) Priority: 29.01.2003 JP 2003020727
(71) Applicant: Nippon Sheet Glass Company, Limited, Osaka-shi, Osaka 541-8559 (JP)
(72) Inventor: SETO, Hiromitsu Nippon Sheet Glass Company, Ltd, Osaka-shi Osaka 541-8559 (JP); KOYAMA, Akihiro Nippon Sheet Glass Company, Lld., Osaka-shi Osaka 541-8559 (JP); ONO, Kazuhisa Nippon Sheet Glass Company, Lld., Osaka-shi Osaka 541-8559 (JP); TSUJI, Daisuke Nippom Sheet Glass Company, Ltd., Osaka-shi Osaka 541-8559 (JP)
(74) Representative: Hart Davis, Jason
(86) International application number: PCT/JP2004/000718
(87) International publication number: WO 2004/067462

(57) **Abstract**

The present invention provides a glass sheet having both temperability and shapability. This glass sheet has a soda-lime silica composition including 13.5 wt% to 16.0 wt% of Na₂O. When the glass sheet is heated and then is quenched rapidly to become a tempered glass, the tempered glass satisfies a formula of T2 - T1 ≥ 5, where T1 denotes a minimum heat-treatment temperature that is required for obtaining a tempered glass with a minimum number of fragments of at least 50, which is determined based on the method of fragmentation test for uniformly tempered glass according to ECE R43, while T2 denotes a maximum heat-treatment temperature that allows a tempered glass to be obtained, with the tempered glass permitting an angle of 25° or smaller to be formed between the normal orientation of a screen surface and the orientation of the surface of a glass sheet having a maximum optical distortion of not higher than 2.4 minutes in a test area D that is measured according to the optical distortion test prescribed in JIS R3212.

## Description

### TECHNICAL FIELD

The present invention relates to a glass sheet that has an excellent balance of shapability and temperability and is suitable for being tempered by air cooling. The present invention also relates to tempered glass produced using the glass sheet.

### BACKGROUND ART

JP61(1986)-197444A and JP62(1987)-246839A propose soda-lime silica glass sheets that are subjected easily to compressive stress by rapid quenching, i.e. that have excellent temperability.

JP61-197444A discloses a glass sheet having a composition consisting essentially of, in % by weight, 63% to 75% of SiO₂, 1.5% to 7% of Al₂O₃, 0% to 6% of TiO₂, 5% to 15% of CaO, 0% to 10% of MgO, 8% to 18% of Na₂O, and 0% to 5% of K₂O, wherein the sum of TiO₂ and Al₂O₃ is 3% to 7%, the sum of MgO and CaO is 6% to 20%, and the sum of Na₂O and K₂O is 10% to 20%. This composition cannot avoid containing a fair amount of Al₂O₃ in order to avoid unwanted coloring caused by TiO₂. An increased amount of Al₂O₃ results in a composition that is difficult to melt.

JP62-246839A discloses a glass sheet having a composition including, in % by weight, 68.0% to 71.0% of SiO₂, 1.6% to 3.0% of Al₂O₃, 8.5% to 11.0% of CaO, 2.0% to 4.0% of MgO, 12.5% to 16.0% of Na₂O, and 0.9% to 3.0% of K₂O so that the sum thereof is at least 97%, wherein the sum of SiO₂ and Al₂O₃ is 70.0% to 73.0%, the sum of CaO and MgO is 12.0% to 15.0%, and the sum of Na₂O and K₂O is 13.5% to 17.0%. In this composition, the component ratio is adjusted so that the temperature at which the viscosity reaches 10⁹ poises is 650°C to 680°C, the temperature at which the viscosity reaches 10¹² poises is 555°C to 585°C, and the difference therebetween is 96°C to 103°C.

In the compositions disclosed in JP61-197444A and JP62-246839A, the Fe₂O₃ content is limited. However, glass compositions in which Fe₂O₃ content is increased to improve the infrared absorptivity also have been known. For instance, WO94/14716 discloses a glass composition that includes, in % by weight, 69% to 75% of SiO₂, 0% to 3% of Al₂O₃, 2% to 10% of CaO, 0% to 2% of MgO, 9% to 17% of Na₂O, 0% to 8% of K₂O, and 0.2% to 1.5% of Fe₂O₃ (total iron oxide), and further may contain a component such as fluorine, wherein the total amount of alkaline-earth oxides is 10% or less. W094/14716 describes that for desired light transmittance, it is important to limit the sum of MgO, CaO, and BaO to 10 wt% or less. The glass composition disclosed in W094/14716 allows a transmittance of less than 30% in the infrared region to be obtained in a 3.85-mm thick glass sheet.

### DISCLOSURE OF THE INVENTION

When intended for use as window glass for vehicles such as automobiles, a flat glass sheet often is formed into a desired shape while being tempered in a heating process. If the resultant tempered glass has greater optical distortion caused through its formation, it loses its commercial value as window glass. The optical distortion that is caused through heating and rapid quenching depends considerably on the ease of changing the sheet shape, i.e. its shapability. The shapability has not gained attention until now but is a very important property together with temperability, particularly in tempering a thin glass sheet.

An object of the present invention is to provide a glass sheet that has both temperability and shapability in practical ranges and has a composition suitable particularly for manufacturing a thin tempered glass. The present inventors succeeded in manufacturing a glass sheet that has a soda-lime silica composition including 13.5 wt% to 16.0 wt% of Na₂O through some experiments, wherein when the glass sheet is tempered by air cooling to be a tempered glass, the tempered glass satisfies the following formula: T2 - T1 ≥ 5.

In the above formula, T1 denotes a minimum heat-treatment temperature (°C) that is required for obtaining a tempered glass with a minimum number of fragments of at least 50, which is determined based on the method of fragmentation test for uniformly tempered glass according to ECE R43 (Economic Commission for Europe Regulation No. 43; Agreement concerning the adoption of uniform technical prescriptions for wheeled vehicles, equipment and parts and the conditions for reciprocal recognition of approvals granted on the basis of these prescriptions). The higher the minimum number of fragments, the higher the tensile stress existing inside the tempered glass.

On the other hand, T2 denotes a maximum heat-treatment temperature (°C) that allows a tempered glass to be obtained, with the tempered glass permitting an angle of 25° or smaller to be formed between the normal orientation of a screen surface and the orientation of the surface of a glass sheet having a maximum optical distortion of not higher than 2.4 minutes in a test area D that is measured according to the optical distortion test prescribed in Japanese Industrial Standard (JIS) R3212. The smaller the angle (mounting angle), the smaller the optical distortion of the tempered glass.

A lower T1 and a higher T2 denote that the glass sheet has excellent temperability and excellent shapability, respectively. T2 should be higher than T1, and a larger value of T2 - T1 is preferable, when consideration is given to mass production.

In the present invention, the thickness of the glass sheet is not limited. However, when being applied to a glass sheet that is relatively thin, for instance, thinner than 2.6 mm and particularly thinner than 2.4 mm, the present invention provides a great effect in manufacturing tempered glass.

### BEST MODE FOR CARRYING OUT THE INVENTION

Hereinafter, the unit "%" indicating an amount of contained always denotes "wt%".

In the present invention, the glass composition includes 13.5% to 16.0%, preferably 14.0% to 15.0% of Na₂O. Na₂O is a component that reduces the viscosity of a glass material to improve productivity In addition, Na₂O increases the thermal expansion coefficient of the glass to improve its temperability. It is important to adjust the content of Na₂O within the above-mentioned range in order to obtain both temperability and shapability.

In a preferable embodiment of the present invention, the glass composition includes 0.4% to 2% of total iron oxide (hereinafter referred to as "T- Fe₂O₃") in terms of Fe₂O₃. Iron oxide exists in the form of Fe₂O₃ and FeO in the glass. Fe₂O₃ and FeO improve the ultraviolet absorptivity and infrared (heat ray) absorptivity, respectively. In order to obtain these absorptivities suitably, it is preferable that the content of T- Fe₂O₃ is at least 0.4%, particularly at least 0.5% while the ratio of FeO in terms of Fe₂O₃ to T-Fe₂O₃ (hereinafter referred to as a "FeO ratio") is 15% to 50%, particularly 20% to 30%. When the content of T- Fe₂O₃ exceeds 2%, the visible light transmittance decreases. When the FeO ratio exceeds 50%, the glass material becomes highly reducible in manufacturing processes to generate silica scum and thereby productivity decreases.

Generally, in a glass sheet with high heat ray absorptivity, its temperature not only rises easily but also decreases easily. Hence, in a process of tempering a glass sheet, the temperature of the glass sheet decreases considerably during the period from the time it is taken out of a heating furnace to the time compressed air is blown on it. Especially, the heat capacity of the glass sheet decreases with the reduction in its thickness. Accordingly, this rapid temperature decrease tends to cause a problem in tempering a thin glass sheet. In the case of a composition including a relatively large amount of T- Fe₂O₃ to improve the heat ray absorptivity, it is desirable to deal with the decrease in temperature of the glass sheet by suppressing radiation through the adjustment of the contents of other components.

According to a preferable embodiment of the present invention, even when the content of T- Fe₂O₃ is 0.4% to 2% and that of FeO content is 15% to 50%, it is possible to obtain a composition with a temperature decreasing rate of 8.0 °C/s or lower. In the present specification, the "temperature decreasing rate" denotes a mean temperature decreasing rate of a glass sheet obtained when the glass sheet is kept in air at 25°C for 10 seconds, with the glass sheet having a thickness of 2.2 mm and having been heated to 600°C. Although not all the factors that affect the temperature decreasing rate have been figured out, at least it is certain that 13.5% to 16.0% of Na₂O has an effect on reduction in the temperature decreasing rate.

Preferably, the glass sheet of the present invention has a composition including: 65% to 80% of SiO₂; 0% to 5% of Al₂O₃; 0% to 10% of MgO; at least 5% but less than 8.5% of CaO; 13.5% to 16.0% of Na₂O; 0% to 5% of K₂O; 0% to 5% of B₂O₃; 0.4% to 2% of T-Fe₂O₃; 0% to 1% of TiO₂; and 0% to 2% of CeO₂, wherein the sum of MgO and CaO is more than 10% but 15% or less, the sum of Na₂O and K₂O is less than 20%, the sum of Al₂O₃ and TiO₂ is less than 3%, and the FeO ratio is 15% to 50 %. From another aspect, the present invention provides a tempered glass having the preferable composition described above and a thickness of less than 2.6 mm, particularly less than 2.4 mm, for example, at least 1.0 mm but less than 2.6 mm.

A preferable embodiment of the present invention provides a glass composition that allows the temperature difference between its softening point and its strain point to be 230°C or lower. This temperature difference is used, for convenience, to serve as an index for indicating the inclination of a viscosity curve. In the present specification, to be precise, the softening point is defined as a temperature at which an equation of log η = 7.6 holds and the strain point as a temperature at which an equation of log η = 14.5 holds. In the equations, η denotes viscosity of glass. In the temperature region between the softening point and the strain point, deformation may be caused due to viscous flow. In order for a shaped glass sheet to maintain its shape and also to be tempered, it is preferable that the glass sheet includes approximately an above-mentioned amount of Na₂O and the temperature difference is smaller.

A soda-lime silica glass composition includes Na₂O, CaO and SiO₂, which are essential components, as well as other optional components such as those exemplified above. The content of such components may be selected form a wider range than that exemplified above as long as the object of the present invention is achieved. The respective components other than Na₂O and Fe₂O₃ are described below.

SiO₂ is a main component forming a glass network. If the content of SiO₂ is less than 65%, the glass has reduced durability. On the other hand, if the content of SiO₂ exceeds 80%, the glass is difficult to melt. Preferably, the content of SiO₂ is 65% to 80%. Moreover, in order to obtain both temperability and shapability, it is preferable that the content of SiO₂ is 67% to 71%.

Al₂O₃ is a component that improves durability of glass. If the content of Al₂O₃ exceeds 5%, the glass is difficult to melt. Preferably, the content of Al₂O₃ is 5% or lower. Moreover, in order to obtain both temperability and shapability, it is preferable that the content of Al₂O₃ is 1.1% to 2.0%, particularly 1.4% to 1.7%.

MgO and CaO both improve durability of glass. The content of these components may be adjusted to control the viscosity and devitrification temperature of the glass during formation thereof. If the content of MgO exceeds 10% or the content of CaO is less than 5% or exceeds 15%, a higher devitrification temperature results. If the sum of MgO and CaO is less than 5%, the glass has reduced durability. On the other hand, if the sum thereof exceeds 15%, a higher devitrification temperature results. A preferable content of CaO is 5% to 15%. In order to obtain both temperability and shapability, it is preferable that the content of CaO is at least 5% but lower than 8.5%, particularly 7.0% to 8.4%. A preferable content of MgO is 10% or lower. In order to obtain both temperability and shapability, it is preferable that the content of MgO is 2.5% to 4.5%. Preferably, the sum of MgO and CaO is 5% to 15%. In order to obtain both temperability and shapability, it is preferable that the sum thereof is higher than 10% but 15% or less, particularly 11% to 14%.

K₂O promotes melting of glass and is considered to contribute to the improvement in temperability and shapability together with Na₂O. However, a large amount of K₂O results in high manufacturing cost. Accordingly, it is preferable that the content of K₂O is 5% or lower, particularly 1% or lower. When the sum of Na₂O and K₂O exceeds 20%, the glass has reduced durability.

B₂O₃ is used for improving durability of glass or as a melting aid and also has an effect of improving ultraviolet absorption. A content of B₂O₃ exceeding 5% causes inconvenience due to its volatilization or the like in forming the glass. If B₂O₃ is included, its content is preferably 5% or lower. There is no problem even if substantially no B₂O₃ is included.

TiO₂ improves ultraviolet absorptivity of glass through interaction with FeO. When this effect is intended to be obtained, it is suitable to add at least 0.01% of TiO₂. When the content of TiO₂ exceeds 1%, the manufacturing cost increases and the glass tends to be yellowish. TiO₂ is a component that contributes to the improvement in temperability together with Al₂O₃. According to the present invention, however, both the temperability and shapability can be obtained even when the sum of Al₂O₃ and TiO₂ is controlled to less than 3% to eliminate undesirable coloring and to keep the meltability of the glass at the same time.

CeO₂ is a component that improves ultraviolet absorptivity of glass through interaction with Fe³⁺. Cerium exists as Ce³⁺ or Ce⁴⁺ in glass. The Ce³⁺ absorbs less light in the visible region and therefore is effective for ultraviolet absorption. When the ultraviolet absorption is intended to occur, a suitable content of CeO₂ (the amount of total cerium oxide in terms of CeO₂) is at least 0.01%. The content of CeO₂ exceeding 2% results in higher production cost and lower visible light transmittance.

When the glass composition includes TiO₂ and/or CeO₂ (TiO₂ + CeO₂ > 0%), the content of T-Fe₂O₃ may be controlled to 1% or less.

Sulfate of alkali or alkaline-earth metal may be used as a refining agent in the glass material. In this case, the glass composition may include 0.5% or less, for instance, 0.1% to 0.5% of SO₃. Furthermore, the glass composition also may include 1% or less of the sum of Sb₂O₃, SnO₂, and the like that are added as a reducing agent or refining agent thereto. Moreover, 1% or less of ZnO may be included in the glass composition to prevent nickel sulfide from being generated.

Impurities other than those described above, for instance, Se, CoO, Cr₂O₃, Mn₂O₃, CuO, Nd₂O₃, Er₂O₃, MoO₃, V₂O₅, La₂O₃, or NiO may be introduced into the glass due to the use of cullets in the raw material. These impurities may be included in the glass, preferably in the range of total amount of 0.1% or less, as long as the object of the present invention is achieved.

### EXAMPLES

### Example 1

Suitable amounts of ferric oxide, titanium oxide, cerium oxide, and a carbon-based reducing agent (carbon powder, etc.) were mixed with batch components of typical soda-lime silica glass. This raw material was melted using a common melting furnace for soda-lime silica glass and then a 2.2-mm thick glass sheet was produced by the float glass process. This glass sheet was cut. Thus a glass sheet with a size of about 300 mm × about 300 mm was obtained.

This glass sheet was hung with tongs to be carried into an electric furnace and then was heated to a predetermined temperature. Thereafter, it was carried out of the electric furnace. Subsequently, using a group of nozzles with a diameter of 4 mm that were arranged at a pitch of 30 mm × 40 mm, compressed air having room temperature was blown on both the whole surfaces of the glass sheet. Thus the glass sheet was tempered by air cooling. The pressure of the compressed air was set at 8000 mmAq. The temperature (heating temperature) of the glass sheet that had been heated was measured with a pyrometer right after the glass sheet was carried out of the electric furnace and before the compressed air was blown on it.

The tempered glass sheet thus obtained was subjected to a determination of the minimum number of fragments of the glass according to the method of fragmentation test for uniformly tempered glass that is described in ECE R43. The minimum number of fragments was determined by the number of fragments included in the area of 5 cm × 5 cm having the lowest number of fragments in the shattered glass sheet. Furthermore, the angle (the mounting angle) between the normal orientation of a screen surface and the orientation of the surface of a glass sheet was measured, with the glass sheet having a maximum optical distortion of not higher than 2.4 minutes in the test area D that was measured according to the optical distortion test defined in JIS R3212. The minimum temperature T1 at which the minimum number of fragments was at least 50 then was determined from the relationship between the minimum number of fragments and the heating temperature of the glass sheet. In addition, the maximum temperature T2 that allows the mounting angle to be 25° or smaller was determined from the relationship between the mounting angle and the heating temperature of the glass sheet.

Furthermore, with respect to the glass prepared from the same raw material as that described above, the temperature (softening point) at which its viscosity η satisfied the condition of log η =7.6 and the temperature (strain point) at which its viscosity η satisfied the condition of log η =14.5 were determined. The softening point and the strain point were measured by the penetration test for viscosity and the beam bending method (ASTM C-598), respectively.

Furthermore, with respect to a 2.2-mm thick glass sheet that was obtained in the same manner as in the above but had not been tempered yet, its temperature was measured with a pyrometer after the glass sheet heated to 600°C using the electric furnace was taken out of the electric furnace and was maintained at room temperature (25°C) for 10 seconds. The mean temperature decreasing rate (°C /s) was determined from the temperature decrease caused in 10 seconds from the above-mentioned temperature measured with the pyrometer. In this case, the temperature of the center of the glass sheet was measured and a mean value of results of the measurements carried out three times was employed. The measurement results are shown in Table 1 together with the glass composition.

### Examples 2 to 3 and Comparative Examples 1 to 3

Tempered glass was manufactured in the same manner as in Example 1 except that the glass composition was changed, and its characteristics were determined. Table 1 shows the glass composition and the determined characteristics.

In the respective examples, the difference between T2 and T1 was at least 5°C, the difference between the softening point and the strain point was 230°C or lower, and the temperature decreasing rate was not higher than 8.0 °C /s. Particularly, in Example 1, the difference between T2 and T1 exceeded 7°C, the difference between the softening point and the strain point was smaller than 220°C, and the temperature decreasing rate was lower than 8.0 °C /s. The compositions described in the respective examples also are suitable for recycling the glass sheet as cullets and therefore also are excellent from the viewpoint of resource recycling.

**Table 1**

| | | Examples | | | Comparative Examples | | |
|---|---|---|---|---|---|---|---|
| | | 1 | 2 | 3 | 1 | 2 | 3 |
| Glass Composition wt% | Na₂O | 14.31 | 13.51 | 13.63 | 12.88 | 13.20 | 12.74 |
| | T-Fe₂O₃ | 0.88 | 0.51 | 1.25 | 0.53 | 0.48 | 0.64 |
| | FeO/T- Fe₂O₃(%) | 28.9 | 29.1 | 24.9 | 26.7 | 26.9 | 37.9 |
| | SiO₂ | 70.1 | 71.1 | 71.0 | 71.3 | 70.9 | 70.8 |
| | Al₂O₃ | 1.53 | 1.54 | 1.62 | 2.05 | 1.88 | 1.80 |
| | CaO | 8.21 | 8.16 | 7.71 | 8.16 | 8.18 | 7.60 |
| | MgO | 3.12 | 4.09 | 3.60 | 3.67 | 4.24 | 3.72 |
| | K₂O | 0.64 | 0.83 | 0.85 | 1.02 | 0.74 | 0.61 |
| | SO₃ | 0.17 | 0.20 | 0.17 | 0.19 | 0.17 | 0.07 |
| | TiO₂ | 0.05 | 0.02 | 0.02 | 0.04 | 0.07 | 0.36 |
| | CeO₂ | 0.92 | 0.02 | 0.04 | 0.13 | 0.10 | 1.58 |
| | CoO | | | 0.0095 | | | |
| | NiO | | | 0.0294 | | | |
| T2 (°C) | | 593 | 597 | 590 | 602 | 602 | 608 |
| T1 (°C) | | 585 | 591 | 584 | 600 | 600 | 607 |
| T2 - T1 (°C) | | 8 | 6 | 6 | 2 | 2 | 1 |
| Softening Point (°C) | | 719 | 728 | 725 | 737 | 736 | 736 |
| Strain Point (°C) | | 502 | 503 | 503 | 501 | 498 | 500 |
| Softening Point - Strain Point (°C) | | 217 | 225 | 222 | 236 | 238 | 236 |
| Temperature Decreasing Rate (°C /s) | | 7.7 | 8.0 | 8.0 | 8.1 | 8.1 | 8.3 |

## Claims

1. A glass sheet, having a soda-lime silica composition comprising 13.5 wt% to 16.0 wt% of Na₂O,
wherein when the glass sheet is heated and then is quenched rapidly to become a tempered glass, the tempered glass satisfies a formula of T2 - T1 ≥ 5, where T1 denotes a minimum heat-treatment temperature that is required for obtaining a tempered glass with a minimum number of fragments of at least 50, which is determined based on the method of fragmentation test for uniformly tempered glass according to ECE R43, while T2 denotes a maximum heat-treatment temperature that allows a tempered glass to be obtained, with the tempered glass permitting an angle of 25° or smaller to be formed between a normal orientation of a screen surface and an orientation of a surface of a glass sheet having a maximum optical distortion of not higher than 2.4 minutes in a test area D that is measured according to the optical distortion test prescribed in JIS R3212.

2. The glass sheet according to claim 1, wherein the composition comprises 0.4 wt% to 2 wt% of total iron oxide in terms of Fe₂O₃, and in the composition, FeO in terms of Fe₂O₃ accounts for 15 wt% to 50 wt% of the total iron oxide.

3. The glass sheet according to claim 2, wherein the composition has a temperature decreasing rate of 8.0°C/s or lower, where the temperature decreasing rate denotes a mean temperature decreasing rate of a glass sheet obtained when the glass sheet is kept in air at 25°C for 10 seconds, with the glass sheet having a thickness of 2.2 mm and having been heated to 600°C.

4. The glass sheet according to claim 1, wherein in the composition, a temperature difference between its softening point and its strain point is 230°C or lower.

5. The glass sheet according to claim 1, wherein the composition comprises 14.0 wt% to 15.0 wt% of Na₂O.

6. The glass sheet according to claim 1, having a composition comprising, in % by weight:
65% to 80% of SiO₂;
0% to 5% of Al₂O₃;
0% to 10% of MgO;
at least 5% but less than 8.5% of CaO;
13.5% to 16.0% of Na₂O;
0% to 5% of K₂O;
0% to 5% of B₂O₃;
0.4% to 2% of total iron oxide in terms of Fe₂O₃;
0% to 1% of TiO₂; and
0% to 2% of CeO₂,
wherein the sum of MgO and CaO is more than 10% but 15% or less, the sum of Na₂O and K₂O is less than 20%, the sum of Al₂O₃ and TiO₂ is less than 3%, and FeO in terms of Fe₂O₃ accounts for 15 wt% to 50 wt% of the total iron oxide.

7. A tempered glass obtained by heating a glass sheet according to claim 1 and then rapidly quenching it.

8. The tempered glass according to claim 7, wherein the tempered glass has a thickness of less than 2.6 mm.

9. A tempered glass, having a thickness of less than 2.6 mm and a composition comprising, in % by weight:
65% to 80°/ of SiO₂;
0% to 5% of Al₂O₃;
0% to 10% of MgO;
at least 5% but less than 8.5% of CaO;
13.5% to 16.0% of Na₂O;
0% to 5% of K₂O;
0% to 5% of B₂O₃;
0.4% to 2% of total iron oxide in terms of Fe₂O₃;
0% to 1% of TiO₂; and
0% to 2% of CeO₂,
wherein the sum of MgO and CaO is more than 10% but is 15% or less, the sum of Na₂O and K₂O is less than 20%, the sum of Al₂O₃ and TiO₂ is less than 3%, and FeO in terms of Fe₂O₃ accounts for 15 wt% to 50 wt% of the total iron oxide.

10. The glass sheet according to claim 9, wherein the composition comprises 14.0 wt% to 15.0 wt% of Na₂O.
